# FASCICULE DE BREVET EUROPEEN

(11) **EP 1 671 108 B1**
(45) Date de publication et mention de la délivrance du brevet: **03.12.2008**
(21) Numéro de dépôt: 04817155.7
(22) Date de dépôt: 08.10.2004
(51) Int. Cl.: G01N 21/55

(54) **DISPOSITIF PORTABLE DE MESURE DE L'INTENSITE LUMINEUSE D'UN OBJET ET UTILISATION D'UN TEL DISPOSITIF**
TRAGBARE EINRICHTUNG ZUR MESSUNG DER LICHTINTENSITÄT EINES OBJEKTS UND VERWENDUNG EINER SOLCHEN EINRICHTUNG
PORTABLE DEVICE FOR MEASURING THE LIGHT INTENSITY OF AN OBJECT, AND USE OF ONE SUCH DEVICE

(30) Priorité: 10.10.2003 FR 0311924; 13.11.2003 US 519674 P
(43) Date de publication de la demande: 21.06.2006
(73) Titulaire: Optis, 83078 Toulon Cedex (FR)
(72) Inventeur: DELACOUR, Jacques, F-83220 Le Pradet (FR)
(74) Mandataire: Domange, Maxime
(86) Numéro de dépôt international: PCT/FR2004/002555
(87) Numéro de publication internationale: WO 2005/036141

(56) Documents cités:
- CH-A- 686 265
- GB-A- 2 041 516
- US-A- 2 224 178
- US-A- 5 392 125
- US-A- 5 404 869
- US-A- 5 637 873
- US-A- 5 757 557
- US-A- 6 018 396
- US-A- 6 034 776
- US-B1- 6 271 916
- PATENT ABSTRACTS OF JAPAN vol. 0124, no. 01 (P-776), 25 octobre 1988 (1988-10-25) & JP 63 140904 A (TOSHIBA CORP), 13 juin 1988 (1988-06-13) cité dans la demande
- PROC SPIE INT SOC OPT ENG; PROCEEDINGS OF SPIE - THE INTERNATIONAL SOCIETY FOR OPTICAL ENGINEERING 2004, vol. 5249, 30 septembre 2003 (2003-09-30), pages 42-53, XP002282217
- DANA K J; ET AL: "REFLECTANCE AND TEXTURE OF REAL-WORLD SURFACES" ACM TRANSACTIONS ON GRAPHICS, vol. 18, no. 1, janvier 1999 (1999-01), pages 1-34, XP000833456 NEW YORK, NY, US

## Description

La présente invention concerne un dispositif de mesure de l'intensité lumineuse d'un objet et l'utilisation d'un tel dispositif.

Cette invention s'applique en particulier, et de façon non limitative, à la mesure de la BRDF ("Bidirectional Reflectance Distribution Function" en anglais) d'un objet ou d'une partie d'objet.

La BRDF est une fonction mathématique qui permet de caractériser l'intensité de la lumière diffusée par une surface lorsque celle-ci est éclairée. La BRDF donne la quantité de lumière diffusée en fonction de la direction d'observation, de l'angle d'incidence de l'éclairage, de la longueur d'onde et de la polarisation.

L'invention s'applique aussi à la mesure de BTDF ("Bidirectionnal Transmittance Distribution Function"), et plus généralement de BSDF ("Bidirectionnal Scattering Distribution Function") et à la mesure de diagrammes d'intensité de sources lumineuses et de diffusions volumiques de matériaux.

Dans une première application connue, des mesures de la BRDF peuvent être utilisées pour caractériser la signature d'un aéronef.

Depuis quelques années, les mesures de la BRDF sont aussi utilisées dans des logiciels d'images de synthèse, de conception assistée par ordinateur (CAO) et de simulation de la lumière afin de simuler le comportement de surfaces vis-à-vis de la lumière.

A cet effet, ces logiciels utilisent, par exemple sous la forme de bibliothèque, des mesures réelles de BRDF effectuées en laboratoire sur les différents types d'objets ou de surface dont on souhaite simuler le comportement optique.

Afin d'effectuer ces mesures de BRDF, on connaît principalement des appareils qui utilisent un échantillon de l'objet à caractériser. Cet échantillon doit être de petites dimensions, typiquement de l'ordre de 10 cm.

De tels appareils de mesure comportent généralement des bras articulés de grandes dimensions au bout desquels sont placés des détecteurs. Ils sont en conséquence volumineux, lourds et, en pratique, difficilement transportables.

Par ailleurs, le temps d'acquisition des mesures avec de tels appareils est très long, et ce notamment en raison de la cinématique des capteurs.

En conséquence, ils sont exclusivement utilisés dans des laboratoires de mesure et ne sont pas adaptés à la mesure sur site.

Un objectif de l'invention est d'obtenir un dispositif de mesure de la BRDF de dimension raisonnable, transportable, pouvant ainsi être utilisé sur site, et permettant d'effectuer des mesures de façon quasi instantanée, grâce à un temps d'acquisition très court.

Le document US 5,637,873 (DAVIS) décrit un dispositif de mesure du BRDF pouvant être utilisé sur site, par exemple pour mesurer certaines propriétés optiques de la surface d'un véhicule.

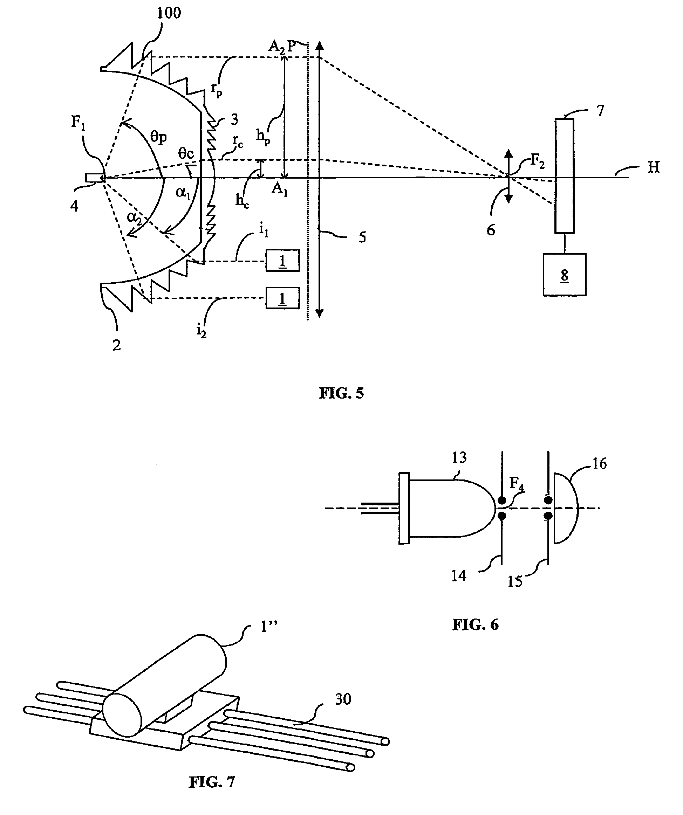

Le document DAVIS décrit, dans sa figure 5, un mode de réalisation de ce dispositif comportant un système de collection de la lumière réfléchie par un objet à caractériser constitué de deux lentilles et d'un réflecteur elliptique.

Plus précisément, on positionne, dans ce mode de réalisation, l'échantillon d'objet à caractériser à un premier foyer du réflecteur elliptique, la lumière réfléchie par l'échantillon étant focalisée au deuxième foyer de ce réflecteur elliptique.

Une première lentille, placée au niveau de ce deuxième foyer est agencée de manière à :
- focaliser les rayons lumineux réfléchis par l'échantillon et qui ne sont pas réfléchis par le réflecteur elliptique ; et
- ne pas dévier les rayons lumineux réfléchis par le réflecteur elliptique.

Le système DAVIS utilise une deuxième lentille en aval de la première lentille, particulière en ce qu'elle comporte à la fois une première partie optique pour collimater les rayons lumineux collectés par la première lentille, et une deuxième partie optique pour collimater les rayons lumineux collectés par le réflecteur elliptique. Cette deuxième lentille particulière présente ainsi une discontinuité à la jonction des deux parties optiques précitées.

Cette discontinuité impose un alignement parfait du réflecteur elliptique et des deux premières lentilles précitées, sans quoi des rayons réfléchis par le réflecteur elliptique se mélangent à ceux focalisés par la première lentille et vice versa. Ce problème est connu de l'homme du métier sous le nom de « cross-talk ».

Le document JP 63-140904 A (TOSHIBA) décrit un dispositif compact de mesure de l'intensité lumineuse d'un objet, ce dispositif comportant une lentille condensatrice et un corps tubulaire réfléchissant, à la sortie duquel est disposé un capteur à matrice surfacique.

Bien que cela ne soit pas explicitement décrit, l'homme du métier comprendra que la réalisation concrète de ce dispositif requiert une matrice de capteurs de dimension importante (typiquement de diagonale supérieure à 50 mm) pour collecter toute la lumière diffusée par l'objet.

Le dispositif de mesure TOSHIBA ne pouvant utiliser des capteurs standards connus à ce jour (dont la diagonale est de l'ordre de 12,7 mm), sa réalisation est nécessairement onéreuse.

Une solution pour résoudre ce problème est d'ajouter un système afocal entre le corps tubulaire réfléchissant et la matrice de capteurs. Ceci permet de réduire la section du faisceau de sortie tout en conservant la collimation de la lumière. Un agencement de ce type est d'ailleurs utilisé dans le système DAVIS où il permet l'utilisation d'un capteur vidéo de petite taille pour observer un faisceau de grand diamètre.

Mais l'inconvénient majeur de cette solution est que l'on éloigne le plan d'observation du corps tubulaire réfléchissant. Or, la divergence du faisceau n'étant jamais nulle, on dégrade d'autant la résolution au niveau du plan d'observation, surtout lorsque l'échantillon à mesurer est éclairé sur une grande surface. Par conséquent, le dispositif TOSHIBA ne permet pas d'effectuer une mesure angulaire précise du diagramme d'intensité de la lumière diffusée.

La présente invention permet de résoudre les inconvénients précités. A cet effet, dans un premier mode de réalisation, elle concerne un dispositif de mesure lumineuse d'un objet ou partie d'objet comme décrit par la revendication 1. Dans un second mode de réalisation, l'invention concerne un dispositif de mesure lumineuse d'un objet ou partie d'objet comme décrit par la revendication 2.

Le capteur vidéo spatial du dispositif de mesure selon l'invention peut notamment être constitué par un capteur vidéo spatial de type CCD, tri CCD, CMOS ou tube cathodique.

On remarquera tout d'abord que le dispositif d'imagerie utilisé dans l'invention peut être associé à un capteur vidéo de format quelconque pour collecter le signal, tout en garantissant une résolution angulaire optimale, ce qui n'est pas le cas du système Toshiba décrit brièvement ci-dessus.

Au surplus, le système collecteur du dispositif selon l'invention, constitué par la partie centrale dioptrique et par la partie périphérique catadioptrique ou le réflecteur, ne comporte que deux éléments optiques, ce qui représente un avantage certain, en terme de coût et de facilité de montage, par rapport au dispositif DAVIS qui lui comporte trois éléments optiques (un réflecteur elliptique, une première lentille et une deuxième lentille particulière).

Surtout, et de façon très avantageuse, la partie centrale dioptrique et la partie périphérique catadioptrique ou le réflecteur du dispositif selon l'invention, permettant de diviser les rayons lumineux diffusés par un objet en deux faisceaux, en fonction de leur inclinaison, sont indépendantes et décorrélées l'une de l'autre.

Cet agencement particulièrement avantageux de ce dispositif en deux parties périphérique et centrale distinctes permet d'obtenir deux faisceaux de rayons ne se croisant pas, offre de bien meilleures tolérances d'alignement au montage et réduit considérablement les problèmes de "cross-talk" précités.

On remarquera aussi que le dispositif de mesure, selon l'invention, utilise des composants standards (un capteur vidéo spatial associé à un dispositif d'imagerie), ce qui permet d'obtenir un coût de réalisation bien inférieur au dispositif TOSHIBA décrit brièvement ci-dessus.

Le dispositif d'imagerie associé au capteur vidéo spatial peut notamment être constitué par un objectif de focalisation, dont la fonction connue est d'imager la sortie du collecteur tel que défini précédemment sur le capteur vidéo.

Cet agencement préféré permet avantageusement de déporter la capteur vidéo et d'améliorer ainsi la résolution du dispositif de mesure selon l'invention, surtout lorsque l'échantillon à mesurer est éclairé sur une large surface.

On obtient ainsi, un dispositif de mesure de bien meilleure résolution que celui décrit dans le document DAVIS dont des moyens d'observation sont constitués par une troisième et une quatrième lentilles agencées pour réaliser un système afocal servant à projeter directement le faisceau lumineux sur le capteur vidéo.

Ce mode préféré de réalisation de l'invention est en conséquence particulièrement adapté pour la caractérisation de surfaces granuleuses ou texturées, de telles mesures nécessitant un éclairage d'une surface relativement importante de l'objet à caractériser.

En variante, le dispositif d'imagerie peut être constitué par un sténopé, notamment lorsque les sources lumineuses éclairent l'échantillon à mesurer sur une surface de faibles dimensions. Ceci permet de réduire les coûts du dispositif de mesure selon l'invention, au détriment relatif de la précision des mesures.

Nous allons maintenant décrire deux variantes de réalisation préférées pour faire converger les rayons des premier et deuxième faisceaux sur le dispositif d'imagerie.

Deux variantes principales du dispositif de mesure selon l'invention peuvent être envisagées.

Dans une première variante, les premier et deuxième faisceaux, issus respectivement de la partie centrale dioptrique et de la partie périphérique catadioptrique, convergent en un même point de focalisation sur laquelle on positionne le dispositif d'imagerie.

Cette première variante de réalisation permet de s'affranchir de la lentille de champ et d'obtenir ainsi un dispositif d'encombrement réduit.

Dans une deuxième variante, les deux faisceaux précités sont collimatés.

Dans un deuxième mode de réalisation de cette deuxième variante, le dispositif de mesure selon l'invention comporte une lentille de champ pour faire converger ces faisceaux collimatés en un point de focalisation, sur lequel est positionné le dispositif d'imagerie.

Ce deuxième mode de réalisation est très simple de conception et présente une certaine souplesse pour le positionnement des différents composants optiques.

En troisième variante, on peut utiliser un objectif télécentrique. Ce type d'objectif accepte un faisceau de lumière collimaté en entrée, ce qui permet de ne pas avoir à faire converger les faisceaux lumineux.

Selon l'invention, différents types de partie centrale dioptrique peuvent être utilisés, notamment une lentille asphérique convergente permettant avantageusement un encombrement réduit.

Dans un autre mode de réalisation, la partie centrale dioptrique est un objectif constitué de lentilles sphériques, ce qui permet de corriger les aberrations chromatiques. La précision des mesures ainsi obtenues se trouvent grandement améliorée lorsque l'éclairage utilise des sources lumineuses à spectre large. Par ailleurs, la fabrication et le contrôle qualité de lentilles sphériques sont particulièrement aisées.

Dans encore un autre mode de réalisation, la partie centrale dioptrique-est une lentille de Fresnel. Ce composant de très faible épaisseur (typiquement de l'ordre du millimètre) permet de réduire l'encombrement, le poids, la quantité de matière et le prix de dispositif de mesure selon l'invention.

Selon deux premières variantes de réalisation, ne faisant pas partie de la présente invention la partie périphérique catadioptrique peut être constituée d'un réflecteur parabolique ou d'un réflecteur elliptique utilisant la réflexion spéculaire et nécessitant éventuellement un traitement réfléchissant selon le matériau. Ces variantes nécessitant peu de matière constituent des modes de réalisation économiques.

La partie périphérique catadioptrique peut comporter:
- un dioptre d'entrée de la lumière diffusée par l'objet ou partie d'objet avec un angle d'inclinaison important ;
- une surface réfléchissante fonctionnant en réflexion totale interne ; et
- un dioptre de sortie du deuxième faisceau.

Cette réalisation, qui ne nécessite pas de traitement réfléchissant, permet avantageusement d'éviter les pertes de lumière. Les parties centrale et périphérique peuvent en outre être réalisées d'un seul bloc.

Dans un mode préféré de réalisation, le dispositif de mesure selon l'invention, comporte en outre :
- au moins une source adaptée à générer un faisceau lumineux collimaté reçu par l'objet ou partie d'objet avec un angle d'incidence prédéterminée par rapport audit axe optique;
- les moyens de mesure étant adaptés à mesurer l'intensité des rayons des premier et deuxième faisceaux réfléchis par l'objet, en fonction de cet angle d'incidence prédéterminée.

Avantageusement, ce mode de réalisation permet de mesurer la BRDF d'un objet en fonction de l'angle d'éclairage de cet objet.

La source lumineuse peut notamment être constituée par un laser ou une diode laser.

Avantageusement cependant, la source est constituée par l'association d'une LED, d'un diaphragme de champ permettant de contrôler la divergence du faisceau lumineux issu de la LED, d'un diaphragme d'ouverture pour en contrôler la section, et d'une lentille de collimation.

Une telle source permet d'obtenir un faisceau d'éclairage de section et de divergence réduites et prédéterminées.

On peut aussi envisager, afin de réduire les coûts, une source simplifiée ne comportant pas de diaphragme d'ouverture ou de lentille de collimation.

Préférentiellement, la source lumineuse est une source blanche et les moyens de mesure sont adaptés à mesurer l'intensité des rayons des premier et deuxième faisceaux, selon la longueur d'onde de ces rayons.

Ce mode de réalisation, prenant en compte l'influence du spectre de lumière, permet la caractérisation de la BRDF de surfaces irisées.

En variante, pour les applications dites "visuelles", des moyens de mesure, tels qu'un capteur vidéo couleur, sont adaptés à mesurer l'intensité des rayons des premier et deuxième faisceaux en fonction des couleurs primaires (rouge, vert et bleu) auxquelles l'oeil humain est sensible.

Un tel capteur permet notamment de reproduire l'aspect visuel de la peau, de cosmétiques, ou celui de peintures irisées comme celles de certaines carrosseries de voiture.

Pour d'autres applications, on peut utiliser un jeu de filtres colorés (par exemple des filtres dichroïques ou interférentiels) que l'on vient successivement positionner devant un capteur vidéo monochrome. On peut ainsi mesurer la BRDF, longueur d'onde par longueur d'onde, pour reconstituer, à posteriori, une BRDF complète en fonction du spectre.

Bien entendu, on peut aussi acquérir des BRDF simplifiées, sans dépendance spectrale, à l'aide d'un capteur monochrome. Ce -capteur peut notamment être sensible aux longueurs d'ondes de l'infrarouge proche ou de l'infrarouge lointain afin d'acquérir des mesures de BRDF infrarouges pour les applications optroniques, militaires et/ou spatiales.

Dans un premier mode de réalisation, le dispositif de mesure selon l'invention comporte une pluralité de sources fixes de faisceaux lumineux collimatés, chacune de ces sources étant indépendante des autres et, adaptée à générer un faisceau reçu par l'objet à caractériser avec un angle d'incidence propre.

Ce mode de réalisation est particulièrement avantageux lorsque le dispositif de mesure est utilisé pour mesurer la BRDF d'un objet, la théorie de l'électromagnétisme et l'expérience pratique montrant que toutes les fonctions de BRDF dépendent de l'angle d'incidence, dans le cas d'objet à surfaces fortement diffusantes.

Dans ce mode de réalisation, le dispositif de mesure de BRDF selon l'invention ne comporte pas de source mobile, ce qui constitue une caractéristique importante dans le cas d'un dispositif portable destiné à la mesure sur site.

Dans ce mode de réalisation, chacune des sources fixes est active à son tour, la BRDF de l'objet étant mesurée en fonction de l'angle d'incidence du faisceau collimaté éclairant cet objet.

Préférentiellement, le dispositif de mesure selon l'invention comporte des moyens de commande, notamment sous forme logicielle, adaptés à allumer séquentiellement les différentes sources lumineuses.

On notera ici que le dispositif TOSHIBA de l'art antérieur ne comporte qu'une seule source lumineuse, fixe, adaptée à émettre un faisceau de lumière collimaté et focalisé sur l'échantillon par une lentille convergente centrale, selon une incidence normale figée.

Le dispositif TOSHIBA ne peut donc pas mesurer une fonction de BRDF en fonction de l'angle d'incidence d'éclairage, comme dans le cas des peintures irisées. Cette limitation importante est donc levée par la présente invention.

Dans un autre mode de réalisation, on utilise une source lumineuse mobile, unique, adaptée à éclairer l'objet ou la partie d'objet à caractériser selon différents angles d'incidence prédéterminés.

Cette source lumineuse peut par exemple être mobile en translation sur un rail.

Dans le deuxième mode de réalisation de la deuxième variante précitée, on peut avantageusement utiliser une source unique mobile en rotation autour du foyer image de la lentille de champ, par rapport à une lame semi-réfléchissante positionnée entre cette lentille de champ et le dispositif d'imagerie, cette lame semi-réfléchissante étant adaptée :
- à réfléchir le faisceau lumineux collimaté généré par la source unique en direction de l'objet à caractériser ; et
- à permettre le passage des premier et deuxième faisceaux convergeant en sortie de la lentille de champ.

Ce mode de réalisation permet de mesurer la BRDF d'un objet ou d'une partie d'objet présentant une surface anisotrope. Bien entendu, la mesure de la BRDF d'un objet présentant une surface anisotrope peut aussi être réalisée dans les variantes décrites précédemment, en faisant tourner le dispositif de 90° par rapport à l'objet à mesurer.

Il permet aussi d'éviter la formation de zones d'ombre dans les faisceaux, les zones d'ombre étant dues à la présence de sources lumineuses dans ces faisceaux.

Préférentiellement, le dispositif selon l'invention comporte des moyens de reconstitution et d'enregistrement sur un support, de mesures de la BRDF de l'objet ou de la partie d'objet ainsi caractérisée.

Ces moyens de reconstitution et d'enregistrement sur un support permettent de calculer la fonction de BRDF à partir des enregistrements du capteur vidéo.

Le dispositif de mesure selon l'invention tel que décrit brièvement ci-dessus dans ses différentes variantes, peut notamment être utilisé sur site, pour mesurer la BRDF d'un objet ou d'une partie d'objet difficilement accessible.

Il peut ainsi en particulier être utilisé pour mesurer la BRDF de la surface d'un tableau de bord d'un véhicule, sans qu'il soit nécessaire de découper un échantillon de ce tableau de bord pour analyse.

Quoi qu'il en soit, le dispositif de mesure selon l'invention permet d'obtenir des mesures d'intensité qu'il était impossible, voir très difficile d'obtenir avec les dispositifs de mesure connus jusqu'alors.

Ce dispositif de mesure peut être réalisé à faible coût et permet en outre d'acquérir les mesures d'intensité de façon très rapide.

De façon tout à fait similaire, l'invention permet de mesurer la BTDF (Bidirectionnal Transmittance Distribution Function), la BSDF (Bidirectionnal Scattering Distribution Function) ou la diffusion volumique d'un objet ou partie d'objet en particulier un objet ou partie d'objet présentant une surface anisotrope. De façon évidente pour l'homme du métier, les sources lumineuses sont alors agencées de manière à éclairer l'objet par derrière, de manière à ce que celui-ci diffuse de la lumière dont l'intensité est mesurée par le dispositif selon

L'invention permet également d'obtenir des diagrammes d'intensité pour des sources lumineuses telles que des LEDs, un afficheur lumineux, un écran de visualisation,... Dans ce cas, le dispositif de mesure ne comporte pas de source lumineuse à proprement parler, l'objet ou partie d'objet constituant ladite source lumineuse.

Parmi les applications de l'invention, on trouve les programmes d'ordinateur mettant en oeuvre des fonctions de simulation des propriétés optiques d'un objet ou partie d'objet, ces programmes utilisant des mesures d'intensité lumineuse obtenues sur un objet réel du même type avec un dispositif de mesure tel que décrit brièvement ci-dessus.

Ces programmes d'ordinateur peuvent en particulier être un logiciel de conception assisté par ordinateur (CAO) ou un logiciel de simulation de la lumière.

L'invention permet ainsi d'obtenir un programme permettant de simuler les propriétés optiques d'objets avant leur fabrication,. Elle permet aussi la simulation d'objets (route, tunnel,...) ou de structures (peau...) difficilement accessibles ou transportables dans un laboratoire.

D'autres aspects et avantages de la présente invention apparaîtront plus clairement à la lecture de la description de modes particuliers de réalisation qui va suivre, cette description étant donnée uniquement à titre d'exemples non limitatifs et faite en référence aux dessins annexés sur lesquels :
- les figures 1 et 3 représentent un dispositif de mesure ne faisant pas partie de la présente invention ;
- les figures 2, 4 et 5 représentent un dispositif de mesure conformément à la présente invention dans deux modes préférés de réalisation ;
- les figures 6 à 8 représentent des sources lumineuses pouvant être utilisées dans un dispositif de mesure conforme à l'invention ;
- la figure 9 représente le fonctionnement d'un objectif télécentrique dans le cadre de l'invention ; et
- la figure 10 représente, à titre d'exemple, un graphique d'intensité de flux lumineux obtenu par un dispositif de mesure conforme à l'invention.

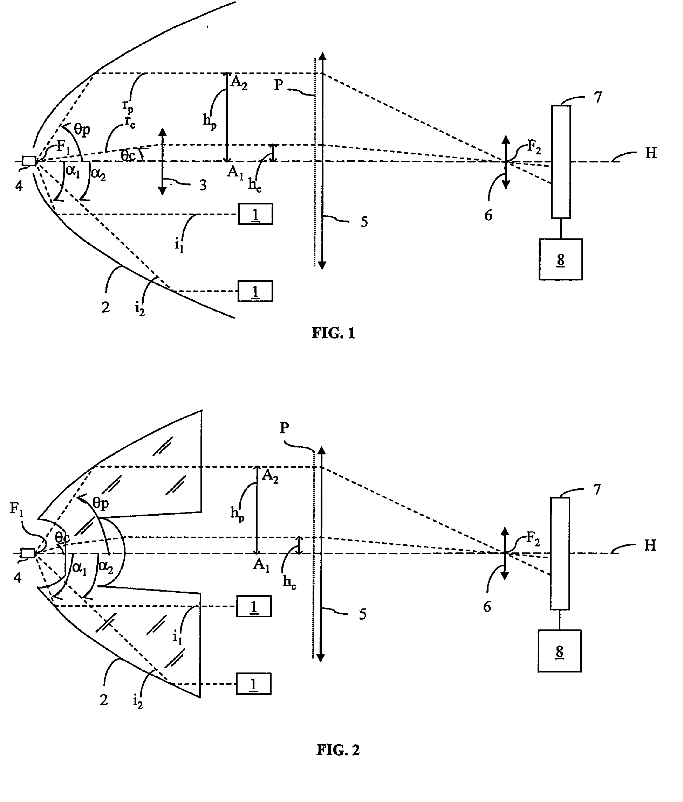

La figure 1 représente un dispositif de mesure de l'intensité lumineuse d'un objet ou d'une partie d'objet ne faisant pas partie de la présente invention.

Dans le mode de réalisation décrit ici, ce dispositif comporte une partie centrale dioptrique 3 sous la forme d'une lentille asphérique convergente avec une conjugaison de type foyer infini, et un réflecteur parabolique 2 percé en son sommet.

De façon connue de l'homme du métier, la lentille asphérique convergente 3 peut être remplacée par une lentille de Fresnel ou un objectif composé de lentilles sphériques.

Le réflecteur parabolique 2 utilise, la réflexion spéculaire. Il peut par exemple être en inox et/ou éventuellement nécessiter un traitement réfléchissant selon le matériau.

La lentille asphérique 3 et le réflecteur parabolique 2 sont agencés de telle sorte que leurs axes optiques H et leurs foyers F₁ sont confondus.

Un objet, ou partie d'objet 4 dont on souhaite mesurer l'intensité lumineuse ou la BRDF, est placé à ce foyer F₁.

Cet objet 4 peut notamment être une source lumineuse pour laquelle on veut mesurer des diagrammes d'intensité.

Dans le mode préféré de réalisation décrit ici, le dispositif de mesure selon l'invention comporte plusieurs sources 1 de faisceaux lumineux collimatés, par exemple cinq.

Chacune de ces sources 1 est indépendante des autres, ce qui signifie qu'elle peut être commandée par exemple par des moyens logiciels non représentés ici pour émettre, ou cesser d'émettre, un faisceau lumineux, indépendamment des autres sources.

Dans le mode de réalisation décrit ici, on supposera que ces sources 1 émettent chacune leur tour.

Pour simplification, deux sources lumineuses 1 sont représentées à la figure 1, ces sources étant adaptées à générer un faisceau lumineux collimaté représenté par les lignes tiretées i₁, i₂.

Sur cette figure, les faisceaux lumineux collimatés ne traversent pas la lentille asphérique 3. Dans un mode de réalisation avantageux, certains faisceaux lumineux i₁, i₂ traversent la lentille asphérique 3, ce qui permet d'éclairer l'objet 4 avec un angle a de faible incidence par rapport à l'axe optique H.

Lorsque ces faisceaux collimatés i₁, i₂ rencontrent la surface interne du réflecteur parabolique 2, ils sont réfléchis en direction du foyer F₁ de cette parabole et, par conséquent, reçus par l'objet 4 placé en ce point.

Chacun des faisceaux lumineux i₁, i₂ est reçu par l'objet 4 avec un angle d'incidence α₁, α₂, par rapport à l'axe optique H, propre et prédéterminé.

Lorsque l'objet 4 est éclairé par un faisceau lumineux en provenance d'une source 1, cet objet 4 diffuse des rayons lumineux dans toutes les directions θ, par rapport à l'axe optique H.

Conformément à l'invention, les rayons lumineux diffusés par l'objet 4 et possédant un angle d'inclinaison θ_{c} faible par rapport à l'axe optique H, sont interceptés par la lentille asphérique convergente 3.

En revanche, les rayons lumineux diffusés par l'objet 4 avec un angle d'incidence θₚ important par rapport à l'axe optique H sont interceptés par la paroi interne réfléchissante du réflecteur parabolique 2.

Préférentiellement, l'angle d'inclinaison de la lumière à partir duquel le rayon lumineux diffuse est intercepté par le réflecteur parabolique 2 se situe entre 30° et 45°.

En effet, au delà de 45°, la lentille asphérique convergente 3 pose des problèmes connus d'imagerie et de transmission de la lumière ; en dessous de 30°, le réflecteur parabolique devient trop encombrant.

Dans le mode de réalisation décrit à la figure 1, la lentille asphérique convergente 3 de conjugaison de type foyer infini, et le réflecteur parabolique 2, génèrent respectivement un premier et deuxième faisceaux collimatés à partir de la lumière diffusée par l'objet ou partie d'objet 4, ces faisceaux étant parallèles à l'axe optique H.

La lentille asphérique convergente 3 et le réflecteur parabolique 2 sont agencés de telle sorte que les rayons rₚ et r_{c} ne se croisent pas entre eux.

Des rayons r_{c} et rₚ de ces premier et deuxième faisceau sont représentés figure 1.

Le dispositif de mesure décrit à la figure 1 comporte en outre des moyens d'observation des premier et deuxième faisceaux précités dans un plan objet P.

Pour un rayon donné r_{c}, rₚ des premier et deuxième faisceaux, on notera respectivement h_{c}, hₚ la distance entre :
- le point A₂ d'intersection entre ce rayon (rₚ, r_{c}) et le plan objet P ; et
- le point A₁ d'intersection entre l'axe optique H et le plan objet P.

De façon évidente pour l'homme du métier, cette distance h_{c}, hₚ est fonction de l'angle de diffusion θ_{c}, θp.

Plus précisément, à chaque distance h correspond un angle de diffusion θ et vice et versa.

Dans le mode de réalisation de la figure 1, le dispositif de mesure comporte une lentille de champ 5 pour faire converger les premier et deuxième faisceaux collimatés en un point de focalisation F₂.

En ce point de focalisation, se trouve un dispositif d'imagerie 6 associé à un capteur vidéo 7 pour obtenir une image, dans le plan objet P, des premier et deuxième faisceaux collimatés au niveau de la lentille de champ 5.

Le dispositif d'imagerie 6 est typiquement un objectif de focalisation classique. Bien entendu, on peut se passer d'objectif de focalisation (selon le principe bien connu de "sténopé") mais on obtient une image floue, fournissant une BRDF dont la résolution est dégradée.

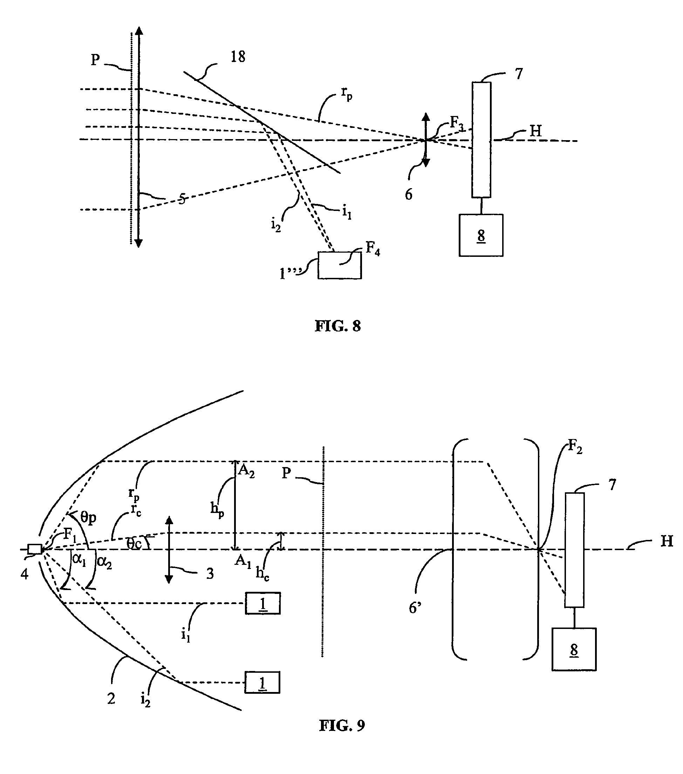

On peut aussi utiliser un objectif de focalisation télécentrique 6' du type de celui représenté à la **figure 9**, le diamètre de cet objectif 6' étant supérieur à la taille de l'objet à mesurer. Un tel objectif fonctionnant en lumière collimatée, il n'y a pas besoin de faire converger les premier et deuxième faisceaux collimatés en un point de focalisation F₂. L'avantage est de ne pas avoir à utiliser de lentille de champ.

Un tel objectif étant connu de l'homme du métier, il ne sera pas décrit.

L'image ainsi enregistrée est traitée numériquement par un ordinateur 8 afin, par exemple, de représenter graphiquement le flux lumineux des premier et deuxième faisceaux en fonction de la distance h des rayons r_{c} et rₚ de ces faisceaux à l'axe optique.

Ce traitement numérique permet ainsi de reconstituer numériquement la fonction de BRDF en vue de son utilisation future dans d'autres applications, par exemple dans des logiciels de simulation de la lumière.

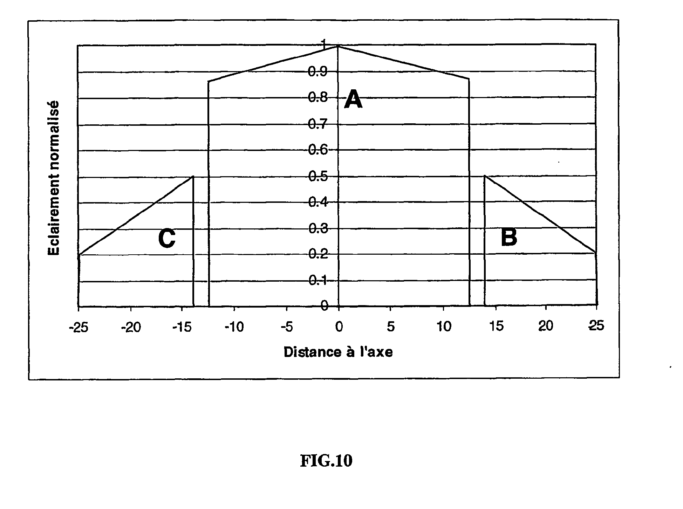

Un tel graphique, donné à titre d'exemple à la **figure 10**, va maintenant être décrit. Ce graphique comporte trois parties A, B et C.

La partie A correspond au flux lumineux issu de la partie centrale dioptrique, les parties B et C (qui sont symétriques) correspondant au flux lumineux issu de la partie phériphérique catadioptrique.

Il apparaît sur ce graphique que ces trois parties sont séparées. Le graphique présente ainsi deux zones de discontinuité correspondant à la séparation physique entre la partie dioptrique et la partie catadioptrique. Ces deux zones traduisent le fait que les faisceaux ne se superposent pas. On peut donc exploiter avantageusement la totalité des deux faisceaux.

Le capteur vidéo 7 est par exemple un capteur spatial de type CCD, tri CCD, CMOS ou tube cathodique.

Quoi qu'il en soit, on obtient ainsi sur ce capteur vidéo, la distribution des rayons r_{c}, rₚ des premier et deuxième faisceaux selon leur distance hₚ, h_{c} par rapport à l'axe optique H.

Comme précisé précédemment, cette distribution en distance permet d'obtenir la distribution angulaire θ de diffusion de ces rayons, la relation entre la distance h et l'angle de diffusion θ étant univoque.

Ce dispositif permet ainsi de mesurer l'intensité des rayons rₚ, r_{c} des premier et deuxième faisceaux, en fonction de l'angle d'inclinaison θₚ, θ_{c} de la lumière diffusée par l'objet 4 et en fonction de l'angle d'incidence α du faisceau lumineux reçu par l'objet 4 en provenance d'une source lumineuse 1.

Dans un mode préféré de réalisation, la source 1 émet une lumière blanche, le capteur vidéo étant un capteur RVB connu de l'homme du métier.

Le dispositif selon l'invention permet ainsi la mesure de l'intensité des rayons rₚ, r_{c} des premier et deuxième faisceau en fonction des trois couleurs primaires (Rouge, Vert et Bleu) auxquelles l'oeil humain est sensible.

Il permet d'obtenir une BRDF colorée permettant de restituer les couleurs d'un objet 4 ayant une surface irisée.

Le dispositif de mesure décrit précédemment en référence à la figure 1, peut, dans une première configuration, être réalisé en associant au réflecteur parabolique 2 percé en son sommet, une lentille asphérique convergente 3, ces deux éléments étant séparés l'un de l'autre.

La **figure 2** représente un mode de réalisation du dispositif de la figure 1 dans lequel le réflecteur parabolique 2 et la lentille asphérique convergente 3 sont réalisés d'un seul bloc dans un même matériau diélectrique transparent, obtenu par exemple par usinage ou par moulage.

Dans ce mode de réalisation, le réflecteur parabolique fonctionne par réflexion totale interne. Plus précisément :
- la lentille convergente 3 comporte une face avant 3a, perpendiculaire à l'axe optique H et une face arrière sphérique 3b symétrique centré sur le foyer F₁ ; et
- le réflecteur parabolique 2 comporte une face avant 2a sphérique, aussi centrée sur le foyer F₁. et une face arrière 2b perpendiculaire à l'axe optique H.

Comme représenté à la figure 2, la face avant 2a du réflecteur parabolique 2 prolonge la face avant 3a de la lentille asphérique convergente 3.

De même, la face arrière 2b est reliée par une surface 2c à la face arrière sphérique 3b de la lentille asphérique convergente 3.

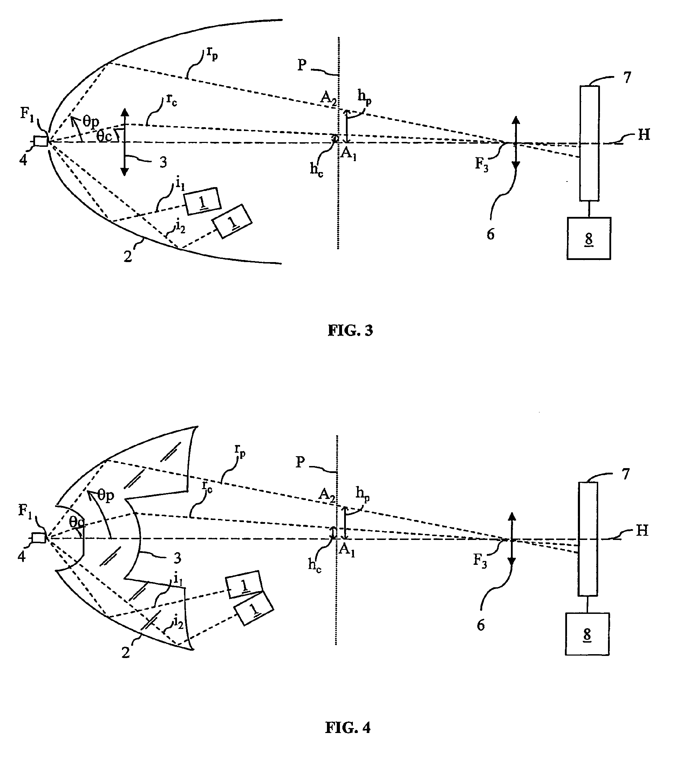

En référence à la **figure 3**, nous allons maintenant décrire un autre mode de réalisation du dispositif de mesure ne faisant pas partie de la présente invention.

Dans ce mode de réalisation, la partie centrale dioptrique 3 est constituée par une lentille asphérique convergente de conjugaison type objet réel / image réelle.

Dans ce mode de réalisation, la partie périphérique catadioptrique est constituée par un réflecteur elliptique 2 dont la surface interne utilise la réflexion spéculaire.

Dans ce mode de réalisation, la lentille asphérique convergente 3 et le réflecteur elliptique réfléchissant 2 sont agencés de telle sorte que les rayons rₚ, r_{c} des premier et deuxième faisceaux convergent en un même point de focalisation F₃.

Dans ce mode de réalisation, le dispositif de mesure ne comporte pas de lentille de champ 5, l'objectif du capteur vidéo 7 étant positionné au point de focalisation F3.

La **figure 4** représente schématiquement un deuxième mode de réalisation du dispositif de mesure selon l'invention.

Dans ce mode de réalisation, la partie centrale dioptrique 3 est constituée par un dioptre asphérique convergent.

La partie périphérique catadioptrique 2 de ce quatrième mode de réalisation comporte un dioptre d'entrée de la lumière diffusée par ledit objet ou partie d'objet avec un angle d'inclinaison important, une surface réfléchissante fonctionnant en réflexion totale interne, et un dioptre de sortie dudit deuxième faisceau.

Plus précisément, la partie périphérique catadioptrique 2 comporte une face avant sphérique 2a centrée sur le foyer F₁ et une face arrière 2b, sphérique également, centrée sur le point de focalisation F₃.

La partie centrale dioptrique 3 constituée par une lentille épaisse comporte une face avant 3a perpendiculaire à l'axe optique H et une face arrière 3b asphérique.

La **figure 5** représente schématiquement la partie centrale dioptrique et la partie périphérique catadioptrique d'un troisième mode de réalisation du dispositif de mesure selon l'invention.

Dans cette variante de réalisation, la partie périphérique catadioptrique 2 est constituée par un dôme dont un axe de révolution est confondu avec l'axe optique H.

La face externe de ce dôme est recouvert de microprismes 100 qui agissent comme des miroirs grâce à la réflexion totale interne et réfléchissent localement les faisceaux lumineux de manière à les rabattre vers l'axe optique H. Ces microprismes 100 peuvent avoir une surface réfléchissante plane ou parabolique. Quoiqu'il en soit, ces microprismes 100 génèrent un faisceau collimaté à partir de la lumière diffusée par l'échantillon.

La partie centrale dioptrique est une lentille de Fresnel dont la fonction optique est identique à la lentille asphérique convergente 3 de la figure 1.

Dans les cinq modes de réalisation décrits précédemment, les sources 1 de faisceaux lumineux collimatés peuvent être constituées par un laser ou une diode laser connue de l'homme du métier.

Ce mode de réalisation est particulièrement adapté à la mesure du BRDF d'un objet ou d'une partie d'objet, lorsqu'une grande résolution angulaire est requise et/ou lorsque l'information spectrale n'est pas utile.

C'est en particulier le cas des surfaces non irisées pour lesquelles la dépendance spectrale est déjà connue et décorrélée de l'angle d'observation.

Nous allons maintenant décrire en référence à la **figure 6** une source lumineuse 1' pouvant être utilisée dans un dispositif de mesure conforme à l'invention.

Cette source lumineuse 1' comporte une LED 13 placée en amont d'un diaphragme de champ 14 lui-même positionné au foyer F₄ d'une lentille de collimation 16.

De façon connue, ce diaphragme de champ permet de contrôler la divergence du faisceau lumineux en sortie de la LED 13.

Cette source lumineuse 1' comporte également un diaphragme d'ouverture 15 situé à proximité de la lentille de collimation 16, pour contrôler l'ouverture du faisceau émis par la LED 13.

L'agencement des différents éléments constituant la source 1' permet d'obtenir un faisceau collimaté possédant une divergence faible et une section limitée.

Les dispositifs de mesure conformes à l'invention, décrits en référence aux figures 1 à 4, comportent plusieurs sources lumineuses fixes 1, 1' émettant chacune leur tour un faisceau lumineux collimaté.

On rappelle que ces sources lumineuses ne sont pas nécessaires lorsqu'il s'agit de mesurer les diagrammes d'intensité d'une source lumineuse située au foyer F₁ des parties centrales dioptriques 3 et périphériques catadioptriques 2.

Nous allons maintenant décrire deux variantes de sources lumineuses mobiles pouvant être utilisées dans un dispositif de mesure selon l'invention.

La **figure 7** représente une source lumineuse 1" unique mobile en translation sur un rail 30.

Cette source lumineuse 1" peut notamment être utilisée dans un dispositif de mesure conforme à celui de la figure 1, lorsque le rail 30 est disposé perpendiculairement à l'axe optique H, de manière à ce que la source mobile 1" émette des rayons lumineux parallèles à cet axe optique H.

Dans ce cas, la source lumineuse 1" peut occuper les positions des différentes sources lumineuses 1 décrites précédemment en référence à la figure 1.

Cette source lumineuse mobile 1" peut également être utilisée dans le mode de réalisation de la figure 2, à la seule condition que le rail 30 soit agencé de manière à ce que les faisceaux lumineux émis par la source 1" soit dirigés dans la direction opposée à celle du point de focalisation F₃.

Quoi qu'il en soit, cette source lumineuse mobile 1" peut être déplacée le long du rail 30 par des moyens non représentés ici.

Ce mode de réalisation est particulièrement avantageux car il permet, en déplaçant la source 1" sur le rail 30, l'éclairage de l'objet 4 sous différents angles d'incidence α.

La **figure 8** représente une variante de source mobile unique 1"' pouvant être utilisée dans un dispositif conforme à l'invention lorsque les parties centrales dioptriques 3 et catadioptriques 2 génèrent des premier et deuxième faisceaux collimatés, comme par exemple dans le mode de réalisation des figures 1 ou 2.

Comme décrit précédemment, un tel mode de réalisation comporte une lentille de champ 5 adaptée à faire converger les rayons r_{c} et rₚ des premier et deuxième faisceaux vers un point de focalisation F₃.

Dans la variante de réalisation décrite ici, le dispositif de mesure selon l'invention comporte une lame semi-réfléchissante 18 positionnée entre cette lentille de champ 5 et le dispositif d'imagerie 6.

Cette lame semi-réfléchissante 18 permet le passage des rayons r_{c}, rₚ des premier et deuxième faisceaux convergents en direction de le dispositif d'imagerie 6.

Dans ce mode de réalisation décrit ici, la source lumineuse 1"' est mobile en rotation autour du foyer image F₄ de la lentille de champ 5 par rapport à la lame semi-réfléchissante 18.

Dans cet agencement, la lame semi-réfléchissante 13 réfléchit le faisceau collimaté généré par la source unique 1 "', en direction de l'objet 4.

Plus précisément, l'incidence α du faisceau lumineux reçu par l'objet 4 dépend directement de l'orientation de la source lumineuse 1" par rapport à la lame semi-réfléchissante 13.

Ce mode de réalisation est particulièrement avantageux car il permet de mesurer la BRDF d'un objet ou d'une partie d'objet 4 présentant une surface anisotrope.

En variante, il est possible d'utiliser une source lumineuse fixe associée à un miroir mobile en rotation selon deux axes, le miroir étant centré sur le foyer image F₄ de la lentille de champ 5, la source lumineuse émettant un faisceau de lumière collimaté se réfléchissant au centre du miroir.

De façon évidente, la source mobile unique décrite ci-dessus en référence à la figure 8, peut être utilisée dans les variantes de réalisation du dispositif de mesure selon l'invention représentées au figure 4. Dans ce cas, l'homme du métier comprendra que l'on utilise pas la lentille de champ 5.

Les différents modes de réalisation du dispositif de mesure selon l'invention décrits précédemment peuvent être utilisés pour mesurer le BRDF d'un objet ou d'une partie d'objet en fonction de l'angle α d'éclairage de cet objet, de la direction d'observation θ de cet objet, et de la polarisation de la lumière lorsqu'une source blanche est utilisée en combinaison avec une caméra vidéo couleur RVB.

Ces modes de réalisation de l'invention présentent tous l'avantage d'être particulièrement compacts grâce à l'association de la partie centrale dioptrique et de la partie périphérique catadioptrique.

Ils permettent en outre de mesurer toute la lumière émise dans un demi-espace.

Le mode préféré de la réalisation décrit en référence à la figure 7 permet en outre la mesure du BRDF d'une surface irisée, sans qu'il soit nécessaire de déplacer le dispositif par rapport à l'objet à caractériser.

Par ailleurs, et de façon évidente pour l'homme du métier, le dispositif de mesure selon l'invention peut être utilisé pour mesurer la BTDF d'une surface translucide. Dans ce cas, l'intensité lumineuse mesurée est celle transmise par l'objet ou la partie d'objet à caractériser et non pas une lumière réfléchie.

Ces différents modes de réalisation permettent ainsi de mesurer le BRDF d'objets ou de surfaces difficilement accessibles, ou pour lesquels on ne souhaite pas prélever d'échantillon.

L'utilisation d'un dispositif de mesure selon l'invention est très simple car il suffit de balayer l'objet à caractériser. Les données de mesure d'intensité recueillies peuvent ensuite être traitées numériquement par exemple par un programme d'ordinateur afin de reconstituer une fonction de BRDF. Cette fonction de BRDF peut être alors utilisée à posteriori dans un logiciel de CAO, d'image de synthèse ou de simulation de la lumière.

Ces programmes d'ordinateur permettent ainsi une simulation particulièrement réaliste des propriétés optiques d'un objet ou du comportement d'un objet vis-à-vis de la lumière.

L'invention trouve ainsi une utilisation privilégiée dans le domaine des logiciels de conception assistés par ordinateur et de simulation de la lumière, car elle permet de prévoir, de façon très réaliste le comportement optique d'un objet avant sa fabrication.

## Revendications

1. - Dispositif de mesure de l'intensité lumineuse d'un objet ou partie d'objet (4), le dispositif comportant :
- une partie centrale dioptrique (3) adaptée à générer un premier faisceau collimaté à partir de la lumière diffusée par ledit objet ou partie d'objet (4) avec un angle d'inclinaison (θ_{c}) faible par rapport à l'axe optique (H) de ladite partie centrale dioptrique (3), lorsque ledit objet (4) est placé au foyer objet (F₁), de ladite partie centrale dioptrique (3) ; et
- une partie périphérique catadioptrique (2) d'axe optique (H) et de foyer objet (F₁), respectivement confondu avec ledit axe optique (H) et ledit foyer (F₁) de ladite partie centrale dioptrique (3), ladite partie périphérique catadioptrique (2) étant indépendante de ladite partie centrale dioptrique (3), et adapté à générer un deuxième faisceau collimaté, à partir de la lumière diffusée par ledit objet ou partie d'objet (4) avec un angle d'inclinaison (θₚ) important par rapport audit axe optique (H), les rayons (rₚ) dudit deuxième faisceau ne croisant pas ceux (r_{c}) dudit premier faisceau dans un plan objet (P) situé en sortie des deux parties (2) et (3) ;
ledit dispositif de mesure comportant en plus :
- un capteur vidéo (7) spatial associé à un dispositif d'imagerie (6) pour obtenir une image desdits premier et deuxième faisceaux dans ledit plan objet (P), chaque rayon (rₚ, r_{c}) desdits faisceaux ayant, dans ledit plan objet (P), une distance (hₚ, h_{c}) audit axe optique (H) fonction dudit angle d'inclinaison (θₚ, θ_{c}) ; et
- des moyens de mesure, à partir de ladite image, de l'intensité des rayons (rₚ, r_{c}) desdits premier et deuxième faisceaux, en fonction dudit angle d'inclinaison (θₚ, θ_{c}).

2. - Dispositif de mesure de l'intensité lumineuse d'un objet ou partie d'objet (4), le dispositif comportant :
- une partie centrale dioptrique (3) constituée par un dioptre asphérique convergent (3) adaptée à générer un premier faisceau convergent à partir de la lumière diffusée par ledit objet ou partie d'objet (4) avec un angle d'inclinaison (θ_{c}) faible par rapport à l'axe optique (H) dudit dioptre (3) ; et
- une partie périphérique catadioptrique (2) d'axe optique (H) et de foyer objet (F₁), respectivement confondu avec ledit axe optique (H) et ledit foyer objet (F₁) de ladite partie centrale dioptrique (3), ladite partie périphérique catadioptrique (2) étant indépendante de ladite partie centrale dioptrique (3), et adaptée à générer un deuxième faisceau convergent, à partir de la lumière diffusée par ledit objet ou partie d'objet (4) avec un angle d'inclinaison (θₚ) important par rapport audit axe optique (H), les rayons (rp) dudit deuxième faisceau ne croisant pas ceux (r_{c}) dudit premier faisceau dans un plan objet (P) situé en sortie des deux parties (2) et (3) ;
ledit dispositif de mesure comportant en plus :
- un capteur vidéo (7) spatial associé à un dispositif d'imagerie (6) pour obtenir une image desdits premier et deuxième faisceaux dans le plan objet (P), chaque rayon (rₚ, r_{c}) desdits faisceaux ayant, dans ledit plan objet (P), une distance (hₚ, h_{c}) audit axe optique (H) fonction dudit angle d'inclinaison (θₚ, θ_{c}); et
- des moyens de mesure, à partir de ladite image, de l'intensité des rayons (rₚ, r_{c}) desdits premier et deuxième faisceaux, en fonction dudit angle d'inclinaison (θ_{c}, θ_{c},

3. - Dispositif de mesure selon la revendication 2, **caractérisé en ce que** lesdits premier et deuxième faisceaux convergent en un même point de focalisation (F₃), le dispositif d'imagerie (6) dudit capteur vidéo (7) étant positionné en ce point de focalisation (F₃).

4. - Dispositif de mesure selon la revendication 1, **caractérisé en ce que** lesdits premier et deuxième faisceaux étant des faisceaux collimatés, il comporte en outre une lentille de champ (5) pour faire converger ces faisceaux en un point de focalisation (F₂) sur lequel est positionné le dispositif d'imagerie (5).

5. - Dispositif de mesure selon la revendication 1, **caractérisé en ce que** les premier et deuxième faisceaux sont des faisceaux collimatés, et **en ce que** ledit dispositif d'imagerie est un objectif de focalisation télécentrique (6').

6. - Dispositif de mesure selon l'une quelconque des revendications 1 à 5, **caractérisé en ce que** ladite partie centrale dioptrique (3) est une lentille asphérique convergente (3), un objectif composé de lentilles sphériques, ou une lentille de Fresnel.

7. - Dispositif de mesure selon l'une quelconque des revendications 1 à 6, **caractérisé en ce qu'**il comporte en outre :
- au moins une source adaptée à générer un faisceau lumineux collimaté reçu par ledit objet ou partie d'objet (4) avec un angle d'incidence (α) prédéterminé par rapport audit axe optique (H) ; et **en ce que** :
- lesdits moyens de mesure sont adaptés à mesurer l'intensité des rayons des premier et deuxième faisceaux réfléchis par ledit objet ou partie d'objet (4), en fonction dudit angle d'incidence prédéterminée (α₁, α₂).

8. - Dispositif de mesure selon la revendication 9 7, **caractérisé en ce que** ladite au moins une source est un laser ou une diode laser.

9. - Dispositif de mesure selon la revendication 7 ou 8, **caractérisé en ce que**, pour générer ledit faisceau lumineux collimaté, ladite au moins une source comporte une LED (13), et éventuellement un diaphragme de champ (14) situé au foyer d'une lentille de collimation (16) et un diaphragme d'ouverture (15) situé à proximité de ladite lentille de collimation.

10. - Dispositif de mesure selon l'une quelconque des revendications 7 à 10, **caractérisé en ce que** ladite au moins une source lumineuse étant une source blanche, lesdits moyens de mesure sont adaptés à mesurer l'intensité des rayons (rₚ, r_{c}) des premier et deuxième faisceaux, selon au moins une longueur d'onde desdits rayons.

11. - Dispositif de mesure selon la revendication 10, **caractérisé en ce que** lesdits moyens de mesure sont adaptés à mesurer l'intensité des rayons (rp, r_{c}) des premier et deuxième faisceaux en fonction des couleurs primaires (Rouge, Vert, Bleu) auxquelles l'oeil est sensible.

12. - Dispositif de mesure selon l'une quelconque des revendications 7 à 11, **caractérisé en ce qu'**il comporte une pluralité de sources fixes de faisceaux lumineux collimatés, chacune de ces sources étant indépendante des autres et, adaptée à générer un faisceau reçu par ledit objet ou partie d'objet (4) avec un angle d'incidence (α) propre.

13. - Dispositif de mesure selon la revendication 12, **caractérisé en ce qu'**il comporte en outre des moyens de commande adaptés à allumer séquentiellement lesdites sources lumineuses.

14. - Dispositif de mesure selon l'une quelconque des revendications 7 13, **caractérisé en ce qu'**il comporte une source lumineuse mobile unique, adaptée à générer un faisceau lumineux reçu par ledit objet oui partie d'objet (4), avec un angle d'incidence (α) variable prédéterminé.

15. - Dispositif de mesure selon la revendication 14, **caractérisé en ce que** ladite source lumineuse unique (1 ") est mobile en translation sur un rail (30).

16. - Dispositif de mesure selon les revendications 4 et 15, **caractérisé en ce que** ladite source unique est mobile en rotation autour du foyer image (F4) de ladite lentille de champ (5), par rapport à une lame semi-réfléchissante (18) positionnée entre ladite lentille de champ (5) et lesdits moyens d'observation, ladite lame semi-réfléchissante (18) étant adaptée :
- à réfléchir ledit faisceau lumineux collimaté généré par ladite source unique (1 "') en direction dudit objet ou partie d'objet (4) ; et
- à permettre le passage desdits premier et deuxième faisceaux convergeant en sortie de ladite lentille de champ (5).

17. - Dispositif de mesure selon l'une quelconque des revendications 1 à 16, **caractérisé en ce qu'**il comporte en outre des moyens de reconstitution et d'enregistrement sur un support, de mesures de la BRDF ("Bidirectional Reflectance Distribution Function"), de la BTDF ("Bidirectional Transmittance Distribution Function") ou de la BSDF ("Bidirectional Scattering Distribution Function") dudit objet ou partie d'objet (4).

18. - Utilisation d'un dispositif de mesure selon l'une quelconque des revendications 1 à 17, pour mesurer la BRDF, la BTDF ou la BSDF d'un objet ou partie d'objet (4), notamment sur site lorsque ledit objet ou partie d'objet (4) est difficilement accessible.

19. - Utilisation d'un dispositif de mesure selon la revendication 18, pour mesurer le BRDF d'un objet (4) ou partie d'objet (4) présentant une surface anisotrope.

20. - Utilisation d'un dispositif de mesure selon l'une quelconque des revendications 1 à 17, pour mesurer des diagrammes d'intensité d'une source lumineuse constituée par ledit objet (4).

## Claims

1. A device for measuring the light intensity of an object or an object portion (4), the device comprising:
a dioptric central portion (3) adapted to generate a first collimated beam from the light diffused by said object or object portion (4) at an angle of inclination (θ_{c}) that is small relative to the optical axis (H) of said dioptric central portion (3), when said object (4) is placed at the object focus (F₁) of said dioptric central portion (3); and
• a catadioptric peripheral portion (2) of optical axis (H) and of object focus (F₁) that coincide respectively with said optical axis (H) and said object focus (F₁) of said dioptric central portion (3), said catadioptric peripheral portion (2) being independent of said dioptric central portion (3), and being suitable for generating a second collimated beam from the light diffused by said object or object portion (4) at an angle of inclination (θₚ) that is large relative to said optical axis (H), the rays (rₚ) of said second beam not intersecting the rays (r_{c}) of said first beam in an object plane (P) situated at the outlet of the catadioptric peripheral portion (2) and the dioptric central portion (3);
said measurement device further comprising:
• a two-dimensional video sensor (7) associated with an imaging device (6) for obtaining an image of said first and second beams in said object plane (P), each ray (rₚ, r_{c}) of said beams having, in said object plane (P), a distance (hₚ, h_{c}) from said optical axis (H) that is a function of said angle of inclination (θₚ, θ_{c}); and
• measurement means for measuring from said image the intensities of the rays (rₚ, r_{c}) of said first and second beams as a function of said angle of inclination (θₚ, θ_{c}).

2. A device for measuring the light intensity of an object or an object portion (4), the device comprising:
• a dioptric central portion (3) constituted by a converging aspherical interface surface (3) adapted to generate a first converging beam from the light diffused by said object or object portion (4) at an angle of inclination (θ_{c}) that is small relative to the optical axis (H) of said interface surface (3); and
• a catadioptric peripheral portion (2) of optical axis (H) and of object focus (F₁) that coincide respectively with said optical axis (H) and said object focus (F₁) of said dioptric central portion (3), said catadioptric peripheral portion (2) being independent of said dioptric central portion (3), and being suitable for generating a second converging beam from the light diffused by said object or object portion at an angle of inclination (θₚ) that is large relative to said optical axis (H), the rays (rₚ) of said second beam not intersecting the rays (r_{c}) of said first beam in an object plane (P) situated at the outlet of the catadioptric peripheral portion (2) and the dioptric central portion (3);
said measurement device further comprising:
• a two-dimensional video sensor (7) associated with an imaging device (6) for obtaining an image of said first and second beams in said object plane (P), each ray (rₚ, r_{c}) of said beams having, in said object plane (P), a distance (hₚ, h_{c}) from said optical axis (H) that is a function of said angle of inclination (θₚ, θ_{c}); and
• measurement means for measuring from said image the intensities of the rays (rₚ, r_{c}) of said first and second beams as a function of said angle of inclination (θₚ, θ_{c}).

3. A measurement device according to claim 2, **characterized in that** said first and second beams converge on a common focus point (F₃), the imaging device (6) of said video sensor (7) being positioned at this focus point (F₃).

4. A measurement device according to claim 1, **characterized in that** said first and second beams are collimated beams and the device further comprises a field lens (5) to cause said beams to converge on a focus point (F₂) where the imaging device (6) is positioned.

5. A measurement device according to claim 1, **characterized in that** the first and second beams are collimated beams, and wherein said imaging device is a telecentric focusing lens (6').

6. A measurement device according to claim 1, **characterized in that** said dioptric central portion (3) is a converging aspherical lens (3), a lens made up of a set of spherical lenses, or a Fresnel lens.

7. A measurement device according to any one of claims 1 to 6, **characterized in that** it further comprises:
• at least one source adapted to generate a collimated light beam received by said object or object portion (4) at an angle of incidence (α) that is predetermined relative to said optical axis (H); and **in that**
• said measurement means are adapted to measure the intensity of the rays of said first and second beams as reflected by said object or object portion(4) as a function of said predetermined angle of incidence (α₁, α₂).

8. A measurement device according to claim 7, **characterized in that** said at least one source is a laser or a laser diode.

9. A measurement device according to claim 7 or 8, **characterized in that**, in order to generate said collimated light beam, said at least one source comprises an LED (13), and optionally a field diaphragm (14) situated at the focus of a collimator lens (16) and an aperture diaphragm (15)situated close to said collimator lens.

10. A measurement device according to any one of claims 7 to 9, **characterized in that** said at least one light source is a source of white light, and said measurement means are adapted to measure the intensity of the rays (rₚ, r_{c}) of the first and second beams at at least one of the wavelengths of said rays.

11. A measurement device according to claim 10, **characterized in that** said measurement means are adapted to measure the intensities of the rays (rₚ, r_{c}) of the first and second beams as a function of the primary colors (red, green, blue) to which the eye is sensitive.

12. A measurement device according to any one of claims 7 to 11, **characterized in that** it includes a plurality of stationary sources of collimated light beams, each of the sources being independent of the others, and each being adapted to generate a beam that is received by said object or object portion (4) at an angle of incidence (α) specific to the source.

13. A measurement device according to claim 12, **characterized in that** it further comprises control means suitable for switching on said light sources in sequence.

14. A measurement device according to any one of claims 7 to 13, **characterized in that** it comprises a single movable light source adapted to generate a light beam that is received by said object or object portion (4) at a predetermined variable angle of incidence (α).

15. A measurement device according to claim 14, **characterized in that** it said single light source (1") is movable in translation on a rail (30).

16. A measurement device according to claims 4 and 15, **characterized in that** said single light source is movable to turn about the image focus (F4) of said field lens (5) relative to a semi-reflective plate (18) positioned between said field lens (5) and said observation means, said semi-reflecting plate (18) being adapted:
• to reflect said collimated light beam generated by said single source (1"') towards said object or object portion (4); and
• to pass said first and second converging beams delivered by said field lens (5).

17. A measurement device according to any one of claims 1 to 16, **characterized in that** it further comprises means for reconstituting measurements of the BRDF ("Bidirectional Reflectance Distribution Function"), the BTDF ("Bidirectional Transmittance Distribution Function"), or the BSDF ("Bidirectional Scattering Distribution Function") of said object or object portion (4) and for recording them on a medium.

18. The use of a measurement device according to any one of claims 1 to 17, for measuring the BRDF, the BTDF, or the BSDF of an object or object portion (4), in particular on-site when the object or object portion (4) is difficult to access.

19. The use of a measurement device according to claim 18 to measure the BRDF of an object or an object portion (4) presenting a surface that is anisotropic.

20. The use of a measurement device according to any one of claims 1 to 17, for measuring intensity patterns of a light source constituted by said object (4).

## Patentansprüche

1. Vorrichtung zur Messung der Lichtintensität eines Objektes oder Objektteils (4), wobei die Vorrichtung folgendes umfaßt:
- ein dioptrisches Mittelteil (3), welches geeignet ist, aus dem durch das Objekt oder Objektteil (4) mit einem geringen Neigungswinkel (θ_{c}) gegenüber der optischen Achse (H) des dioptrischen Mittelteils (3) gestreuten Licht ein erstes kollimiertes Lichtbündel zu erzeugen, wenn sich das Objekt (4) im Objektbrennpunkt (F₁) des dioptrischen Mittelteils (3) befindet, und
- ein katadioptrisches Umfangsteil (2) mit der optischen Achse (H) und dem Objektbrennpunkt (F₁), die bzw. der mit der optischen Achse (H) bzw. dem Brennpunkt (F₁) des dioptrischen Mittelteils (3) zusammenfällt, wobei das katadioptrische Umfangsteil (2) von dem dioptrischen Mittelteil (3) unabhängig und geeignet ist, aus dem durch das Objekt oder Objektteil (4) mit einem großen Neigungswinkel (θₚ) gegenüber der optischen Achse (H) gestreuten Licht ein zweites kollimiertes Lichtbündel zu erzeugen, wobei die Strahlen (rp) des zweiten Lichtbündels in einer am Ausgang der beiden Teile (2) und (3) gelegenen Objektebene (P) nicht diejenigen (r_{c}) des ersten Lichtbündels kreuzen,
wobei die Meßvorrichtung zudem folgendes umfaßt:
- einen Raum-Bildsensor (7), der einer Bildgebungsvorrichtung (6) zugeordnet ist, um ein Bild des ersten und des zweiten Lichtbündels in der Objektebene (P) zu erhalten, wobei jeder Strahl (rp, r_{c}) der Lichtbündel in der Objektebene (P) einen von dem genannten Neigungswinkel (θₚ, θ_{c}) abhängigen Abstand (hp, h_{c}) von der optischen Achse (H) aufweist, sowie
- Mittel, um anhand des Bildes die Intensität der Strahlen (rp, r_{c}) des ersten und des zweiten Lichtbündels in Abhängigkeit des Neigungswinkels (θₚ, θ_{c}) zu messen.

2. Vorrichtung zur Messung der Lichtintensität eines Objektes oder Objektteils (4), wobei die Vorrichtung folgendes umfaßt:
- ein dioptrisches Mittelteil (3), das von einem asphärischen konvergenten Diopter (3) gebildet ist, welcher geeignet ist, aus dem durch das Objekt oder Objektteil (4) mit einem geringen Neigungswinkel (θ_{c}) gegenüber der optischen Achse (H) des Diopters (3) gestreuten Licht ein erstes konvergierendes Lichtbündel zu erzeugen, und
- ein katadioptrisches Umfangsteil (2) mit der optischen Achse (H) und dem Objektbrennpunkt (F₁), die bzw. der mit der optischen Achse (H) bzw. dem Brennpunkt (F₁) des dioptrischen Mittelteils (3) zusammenfällt, wobei das katadioptrische Umfangsteil (2) von dem dioptrischen Mittelteil (3) unabhängig und geeignet ist, aus dem durch das Objekt oder Objektteil (4) mit einem großen Neigungswinkel (θₚ) gegenüber der optischen Achse (H) gestreuten Licht ein zweites konvergierendes Lichtbündel zu erzeugen, wobei die Strahlen (rₚ) des zweiten Lichtbündels in einer am Ausgang der beiden Teile (2) und (3) gelegenen Objektebene (P) nicht diejenigen (r_{c}) des ersten Lichtbündels kreuzen,
wobei die Meßvorrichtung zudem folgendes umfaßt:
- einen Raum-Bildsensor (7), der einer Bildgebungsvorrichtung (6) zugeordnet ist, um ein Bild des ersten und des zweiten Lichtbündels in der Objektebene (P) zu erhalten, wobei jeder Strahl (rₚ, r_{c}) der Lichtbündel in der Objektebene (P) einen von dem genannten Neigungswinkel (θₚ, θ_{c}) abhängigen Abstand (hₚ, h_{c}) von der optischen Achse (H) aufweist, sowie
- Mittel, um anhand des Bildes die Intensität der Strahlen (rₚ, r_{c}) des ersten und des zweiten Lichtbündels in Abhängigkeit des Neigungswinkels (θₚ, θ_{c}) zu messen.

3. Meßvorrichtung nach Anspruch 2, **dadurch gekennzeichnet, daß** das erste und das zweite Lichtbündel in einem gleichen Fokussierpunkt (F₃) zusammenlaufen, wobei die Bildgebungsvorrichtung (6) des Bildsensors (7) in diesem Fokussierpunkt (F₃) angeordnet ist.

4. Meßvorrichtung nach Anspruch 1, **dadurch gekennzeichnet, daß** sie - wenn das erste und das zweite Lichtbündel kollimierte Lichtbündel sind - ferner eine Feldlinse (5) aufweist, um diese Lichtbündel in einem Fokussierpunkt (F₂), in dem die Bildgebungsvorrichtung (6) angeordnet ist, zusammenlaufen zu lassen.

5. Meßvorrichtung nach Anspruch 1, **dadurch gekennzeichnet, daß** das erste und das zweite Lichtbündel kollimierte Lichtbündel sind und die Bildgebungsvorrichtung ein telezentrisches Fokussierobjektiv (6') ist.

6. Meßvorrichtung nach einem der Ansprüche 1 bis 5, **dadurch gekennzeichnet, daß** das dioptrische Mittelteil (3) eine asphärische Sammellinse (3), ein aus sphärischen Linsen bestehendes Objektiv oder eine Fresnel-Linse ist.

7. Meßvorrichtung nach einem der Ansprüche 1 bis 6, **dadurch gekennzeichnet, daß** sie ferner folgendes umfaßt:
- wenigstens eine Quelle, die geeignet ist, ein kollimiertes Lichtbündel zu erzeugen, das durch das Objekt oder Objektteil (4) mit einem vorbestimmten Einfallwinkel (α) gegenüber der optischen Achse (H) empfangen wird; und daß
- die Meßmittel geeignet sind, die Intensität der durch das Objekt oder Objektteil (4) reflektierten Strahlen des ersten und des zweiten Lichtbündels in Abhängigkeit des vorbestimmten Einfallwinkels (α₁, α₂) zu messen.

8. Meßvorrichtung nach Anspruch 7, **dadurch gekennzeichnet, daß** die wenigstens eine Quelle ein Laser oder eine Laserdiode ist.

9. Meßvorrichtung nach Anspruch 7 oder 8, **dadurch gekennzeichnet, daß** zur Erzeugung des kollimierten Lichtbündels die wenigstens eine Quelle eine LED (13) sowie eventuell eine im Brennpunkt einer Kollimationslinse (16) befindliche Feldblende (14) und eine in der Nähe der Kollimationslinse befindliche Aperturblende (15) aufweist.

10. Meßvorrichtung nach einem der Ansprüche 7 bis 10, **dadurch gekennzeichnet, daß** - wenn die wenigstens eine Lichtquelle eine weiße Quelle ist - die Meßmittel geeignet sind, die Intensität der Strahlen (rₚ, r_{c}) des ersten und des zweiten Lichtbündels entsprechend wenigstens einer Wellenlänge der Strahlen zu messen.

11. Meßvorrichtung nach Anspruch 10, **dadurch gekennzeichnet, daß** die Meßmittel geeignet sind, die Intensität der Strahlen (rₚ, r_{c}) des ersten und des zweiten Lichtbündels in Abhängigkeit der Primärfarben (Rot, Grün, Blau), für die das Auge empfänglich ist, zu messen.

12. Meßvorrichtung nach einem der Ansprüche 7 bis 11, **dadurch gekennzeichnet, daß** sie eine Vielzahl fester Quellen für kollimierte Lichtbündel aufweist, wobei eine jede dieser Quellen von den anderen unabhängig und geeignet ist, ein Lichtbündel zu erzeugen, das von dem Objekt oder Objektteil (4) mit einem eigenen Einfallwinkel (α) empfangen wird.

13. Meßvorrichtung nach Anspruch 12, **dadurch gekennzeichnet, daß** sie ferner Steuermittel umfaßt, die geeignet sind, die Lichtquellen sequentiell einzuschalten.

14. Meßvorrichtung nach einem der Ansprüche 7 bis 13, **dadurch gekennzeichnet, daß** sie eine einzige bewegliche Lichtquelle aufweist, die geeignet ist, ein Lichtbündel zu erzeugen, das von dem Objekt oder Objektteil (4) mit einem vorbestimmten variablen Einfallwinkel (α) empfangen wird.

15. Meßvorrichtung nach Anspruch 14, **dadurch gekennzeichnet, daß** die einzige Lichtquelle (1 ") auf einer Schiene (30) verschiebebeweglich ist.

16. Meßvorrichtung nach den Ansprüchen 4 und 15, **dadurch gekennzeichnet, daß** die einzige Quelle um den Bildbrennpunkt (F4) der Feldlinse (5), gegenüber einer zwischen der Feldlinse (5) und den Beobachtungsmitteln angeordneten halbreflektierenden Platte (18) drehbeweglich ist, wobei die halbreflektierende Platte (18) geeignet ist:
- das durch die einzige Quelle (1"') erzeugte kollimierte Lichtbündel in Richtung des Objekts oder Objektteils (4) zu reflektieren, und
- den Durchgang des ersten und zweiten Lichtbündels, die am Ausgang der Feldlinse (5) zusammenlaufen, zu ermöglichen.

17. Meßvorrichtung nach einem der Ansprüche 1 bis 16, **dadurch gekennzeichnet, daß** sie ferner Mittel umfaßt, um Messungen der BRDF ("Bidirectional Reflectance Distribution Function"), der BTDF ("Bidirectional Transmittance Distribution Function") oder der BSDF ("Bidirectional Scattering Distribution Function") des Objektes oder Objektteils (4) wiederherzustellen und auf einem Träger zu speichern.

18. Verwendung einer Meßvorrichtung nach einem der Ansprüche 1 bis 17, zum Messen der BRDF, der BTDF oder der BSDF eines Objektes oder Objektteils (4), insbesondere vor Ort, wenn das Objekt oder Objektteil (4) schwer zugänglich ist.

19. Verwendung einer Meßvorrichtung nach Anspruch 18, zum Messen der BRDF eines Objektes (4) oder Objektteils (4) mit anisotroper Oberfläche.

20. Verwendung einer Meßvorrichtung nach einem der Ansprüche 1 bis 17, zum Messen von Intensitätsdiagrammen einer von dem Objekt (4) gebildeten Lichtquelle.
